# EUROPEAN PATENT APPLICATION

(11) **EP 3 795 604 A1**
(43) Date of publication of application: **24.03.2021**
(21) Application number: 20162835.1
(22) Date of filing: 12.03.2020
(51) Int. Cl.: C08G 59/42, C08G 59/68, C08L 63/00

(54) **CURING COMPOSITION FOR TOUGHENED EPOXY RESIN**

(30) Priority: 19.09.2019 IN 201911037749
(71) Applicant: SABIC Global Technologies B.V., 4612 PX Bergen op Zoom (NL)
(72) Inventor: AGRAWAL, Mukesh, 562125 Karnataka (IN); PAL, Jaykisor, 562125 Karnataka (IN); VERGHESE, Nikhil K. E., Sugar Land, TX Texas 77478 (US); CHANDRA, Girish, Sugar Land, TX Texas 77478 (US)
(74) Representative: Balder IP Law, S.L.

(57) **Abstract**

A curable composition comprising: 30-70 wt%, preferably 35-60 wt% or 40-55 wt% of an epoxy resin composition comprising one or more epoxy resins; 15-50 wt%, preferably 20-50 wt% or 20-45 wt% of an anhydride curing agent; 2-50 wt%, preferably 2-40 wt% or 5-35 wt% of a poly(phenylene ether) oligomer; and 0.5-1.3 wt%, preferably 0.6-1.3 wt% or 0.7-1.2 wt% of a heterocyclic accelerator, wherein the heterocyclic accelerator comprises a substituted or unsubstituted C₃₋₆ heterocycle comprising 1-4 ring heteroatoms, wherein each heteroatom is independently N, O, P, Si, or S, preferably N, O, or S; more preferably N, wherein a cured product of the curable composition has a T_{g} of 130 to 180 °C by DMA, a G_{1C} of 160 to 300 J/m² by ASTM D5045, the T_{g} and the G_{1C} of the cured product being measured after curing under the same curing conditions.

## Description

### CROSS REFERENCE TO RELATED APPLICATIONS

This application claims the benefit of and priority to Indian Patent Application No. 201911037749, filed September 19, 2019, the entire content of which is incorporated by reference herein.

### BACKGROUND

Thermoset polymers are used in a wide variety of consumer and industrial products including protective coatings, adhesives, electronic laminates (such as those used in the fabrication of printed circuit boards), flooring and paving, glass fiber-reinforced pipes, and automotive parts (such as leaf springs, pumps, and electrical components). Thermoset epoxies are derived from thermosetting epoxy resins that are polymerized in the presence of a co-reactive curing agent (also referred to in the art as a hardener), a catalytic curing agent (also referred to in the art as a cure accelerator or a catalyst), to afford a cured thermoset polymer.

Anhydride curing agents can be used to provide cured epoxies having higher heat properties, better electrical properties, longer pot life, and lower shrinkage. Anhydride curing agents provide higher crosslink densities and restrict the motion of the molecular chains between crosslink sites, which results in a tradeoff between an increase in glass transition temperature (T_{g}) and an undesirable decrease in toughness.

There accordingly remains a need for epoxy resins having a balance between T_{g} and fracture toughness.

### BRIEF DESCRIPTION

Provided is a curable composition including 30 to 70 weight percent (wt%), preferably 35 to 60 wt%, more preferably 40 to 55 wt% of an epoxy resin composition including one or more epoxy resins, each independently having an epoxy equivalent weight of at least 2; 15 to 50 wt%, preferably 20 to 50 wt%, more preferably 20 to 45 wt% of an anhydride curing agent; 2 to 50 wt%, 2 to 40 wt%, more preferably 5 to 35 wt% of a poly(phenylene ether) oligomer; and 0.5 to 1.3 wt%, preferably 0.6 to 1.3 wt%, more preferably 0.7 to 1.2 wt% of a heterocyclic accelerator, wherein the heterocyclic accelerator comprises a substituted or unsubstituted C₃₋₆ heterocycle comprising 1 to 4 ring heteroatoms, wherein each heteroatom is independently nitrogen, oxygen, phosphorus, silicon, or sulfur; preferably nitrogen, oxygen, or sulfur; more preferably nitrogen, wherein a cured product of the curable composition has a glass transition temperature of 130 to 180 °C, preferably 130 to 170°C, more preferably 130 to 160°C, as determined by dynamic mechanical analysis, wherein the cured product of the curable composition has a critical strain energy release rate of 160 to 300 J/m², as determined by ASTM D5045, wherein the glass transition temperature and the critical strain energy of the cured product are measured after curing the curable composition under the same curing conditions, and wherein each wt% is based on a total weight of the curable composition.

Also provided is a method for the manufacture of the curable composition including combining the anhydride curing agent and the poly(phenylene ether) oligomer to form a first reaction mixture, preferably wherein the first reaction mixture contains no solvent or reactive diluent; combining the first reaction mixture and the epoxy resin composition to form a second reaction mixture; and adding the heterocyclic accelerator to the second reaction mixture, preferably wherein the combining to form the first reaction mixture and the combining to form the second reaction mixture are each independently at a temperature of 50 to 160°C, preferably 60 to 120°C, more preferably 70 to 100°C.

Also provided are a thermoset epoxy composition including the cured product of the curable composition and an article including the thermoset epoxy composition, preferably wherein the article is in the form of in the form of a composite, a foam, a fiber, a layer, a coating, an encapsulant, an adhesive, a sealant, a component, a prepreg, a casing, or a combination thereof.

The above described and other features are exemplified by the following detailed description.

### DETAILED DESCRIPTION

This disclosure relates to a curable composition including an epoxy resin, an anhydride as curing agent, a poly(phenylene ether) oligomer, and a heterocyclic accelerator (catalyst). The inventors have discovered that an anhydride, for example methyltetrahydrophthalic anhydride (MTHPA), can be a useful curing agent for making cured epoxies having improved thermal properties and fracture toughness. The disclosed curable composition and the corresponding cured thermoset product can be used in a variety of applications including as adhesives, coatings, encapsulants, epoxy tooling compositions, potting compositions, and fiber-reinforced composites. As used herein, "curable" and "cure" refer to both polymerization and crosslinking reactions between the components of the curable composition.

The curable composition includes 30 to 70 weight percent (wt%) or 40 to 70 wt%, preferably 35 to 60 wt% or 40 to 60 wt%, more preferably 40 to 55 wt% of an epoxy resin composition comprising one or more epoxy resins, each independently having an epoxy equivalent weight of at least 2, wherein the amount of the epoxy resin composition is based on the total weight of the curable composition.

The epoxy resin composition can be a bisphenol A epoxy resin, a triglycidyl-substituted epoxy resin, a tetraglycidyl-substituted epoxy resin, a bisphenol F epoxy resin, a phenol novolak epoxy resin, a cresol novolak epoxy resin, a cycloaliphatic diglycidyl ester epoxy resin, a cycloaliphatic epoxy resin comprising a ring epoxy group, an epoxy resin containing a spiro-ring, a hydantoin epoxy resin, or a combination thereof. In an aspect, the epoxy resin is bisphenol-A diglycidyl ether (BPA-DGE).

The curable composition further includes an anhydride curing agent. The anhydride curing agent is present in an amount of 15 to 50 wt% or 20 to 50 wt%, preferably 20 to 50 wt% or 25 to 50 wt%, more preferably 20 to 45 wt% or 25 to 45 wt%, based on the total weight of the curable composition.

The anhydride curing agent can be phthalic anhydride, hexahydrophthalic anhydride, tetrahydrophthalic anhydride, methyltetrahydrophthalic anhydride, methylhexahydrophthalic anhydride, maleic anhydride, succinic anhydride, dodecylsuccinic anhydride, dichlorosuccinic anhydride, or a combination thereof. In a preferred aspect, the anhydride curing agent is methyltetrahydrophthalic anhydride, methylhexahydrophthalic anhydride, dodecylsuccinic anhydride, methyl nadic anhydride, or a combination thereof. For example, the anhydride curing agent can consist of methyltetrahydrophthalic anhydride.

The stoichiometric ratio between the anhydride curing agent and the epoxy resin composition can be, for example, 0.1:1 to 2.0:1, preferably 0.4:1 to 1.2:1, more preferably 0.6:1 to 1:1. The stoichiometric ratio is the molar ratio of anhydride functionalities in the anhydride curing agent to the epoxy functionalities in the epoxy resin composition. The stoichiometric ratio is also referred to herein as the anhydride to epoxy (A/E) ratio.

In addition to the epoxy resin composition and the anhydride curing agent, the composition further includes a poly(phenylene ether) oligomer. The poly(phenylene ether) oligomer is included in an amount of 2 to 50 wt% or 5 to 50 wt%, preferably 2 to 40 wt% or 5 to 40 wt%, more preferably 5 to 35 wt% or 10 to 35 wt%, even more preferably 20 to 35 wt% or 20 to 30 wt%, based on the total weight of the curable composition.

The poly(phenylene ether) oligomer (PPE oligomer) includes those including repeating structural units of formula (1) 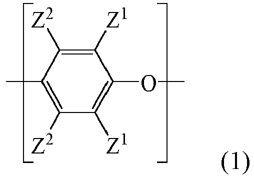 wherein each occurrence of Z¹ is independently halogen, unsubstituted or substituted C₁₋₁₂ primary or secondary hydrocarbyl, C₁₋₁₂ hydrocarbylthio, C₁₋₁₂ hydrocarbyloxy, or C₂-C₁₂ halohydrocarbyloxy wherein at least two carbon atoms separate the halogen and oxygen atoms; and each occurrence of Z² is independently hydrogen, halogen, unsubstituted or substituted C₁₋₁₂ primary or secondary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms.

In the PPE oligomer of formula (1), each occurrence of Z¹ is independently halogen, unsubstituted or substituted C₁₋₆ primary or secondary hydrocarbyl, C₁₋₆ hydrocarbylthio, C₁₋₆ hydrocarbyloxy, or C₂-C₇ halohydrocarbyloxy wherein at least two carbon atoms separate the halogen and oxygen atoms; and each occurrence of Z² is independently hydrogen, halogen, unsubstituted or substituted C₁₋₆ primary or secondary hydrocarbyl, C₁₋₆ hydrocarbylthio, C₁₋₆ hydrocarbyloxy, or C₂₋₇ halohydrocarbyloxy wherein at least two carbon atoms separate the halogen and oxygen atoms.

For example, in the PPE oligomer of formula (1), each occurrence of Z¹ can be independently halogen, or unsubstituted or substituted primary C₁₋₆ hydrocarbyl; and each occurrence of Z² is independently hydrogen, halogen, or unsubstituted or substituted primary C₁₋₆ hydrocarbyl. For example, each occurrence of Z¹ can be the same or different, and each occurrence of Z² can be the same or different. The PPE oligomer can include units having aminoalkyl-containing end group(s) that can be located, for example, in a position ortho to the hydroxy group. The tetramethyldiphenoquinone (TMDQ) end groups, which can be derived from 2,6-dimethylphenol-containing reaction mixtures in which tetramethyldiphenoquinone by-product is present. Thus, Z¹ and Z² can each independently be hydrogen, cyclohexyl, phenyl, di-n-butylaminomethyl, morpholinomethyl or a combination thereof. For example, the PPE oligomer can include 2,6-dimethyl-1,4-phenylene ether units, 2,3,6-trimethyl-1,4-phenylene ether units, or a combination thereof. For example, the PPE oligomer includes one or more poly(2,6-dimethyl-1,4-phenylene ether) repeating units, or the PPE oligomer consists of poly(2,6-dimethyl-1,4-phenylene ether) repeating units.

The PPE oligomer can include units of a monofunctional or bifunctional oligomer of formula (2) 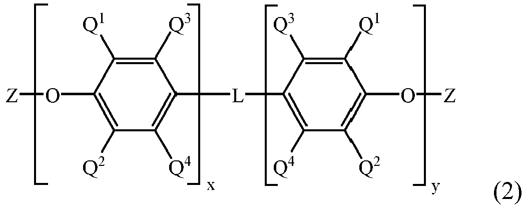 wherein each occurrence of Q¹ and Q² is independently halogen, unsubstituted or substituted C₁₋₁₂ primary or secondary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms; each occurrence of Q³ and Q⁴ is independently hydrogen, halogen, unsubstituted or substituted C₁-C₁₂ primary or secondary hydrocarbyl, C₁-C₁₂ hydrocarbylthio, C₁₋₁₂ hydrocarbyloxy, or C₂₋₁₂ halohydrocarbyloxy wherein at least two carbon atoms separate the halogen and oxygen atoms; each Z is independently hydrogen, allyl, vinyl, or (meth)acrylate provided that at least one Z is allyl, vinyl, or (meth)acrylate; x and y have an average value, and are each independently 0-30, or 0-20, preferably 0-15, still more preferably 0-10, even more preferably 0-8, provided that the sum of x and y is at least 2, preferably at least 3, more preferably at least 4. The PPE oligomer can include different groups L in different repeating structure units.

For example, in formula (2), L can be of formula (3) or formula (4) as described below. For example, L can be of formula (3) 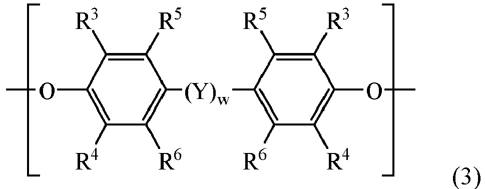 wherein each occurrence of R³, R⁴, R⁵, and R⁶ is independently hydrogen, halogen, unsubstituted or substituted C₁₋₁₂ primary or secondary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms; w is 0 or 1; and Y is
-O-, 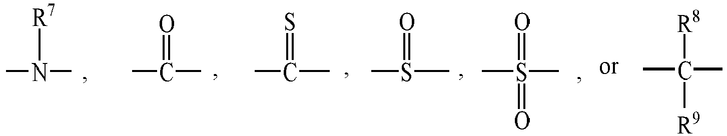 wherein each occurrence of R⁷ is independently hydrogen or C₁₋₁₂ hydrocarbyl, each occurrence of R⁸ and R⁹ is independently hydrogen, C₁₋₁₂ hydrocarbyl, or R⁸ and R⁹ together form a C₄₋₁₂ cyclohydrocarbylene with the carbon atom. For example, in the PPE oligomer of formula (3), each of R³, R⁴, R⁵, and R⁶ can be independently hydrogen, halogen, unsubstituted or substituted C₁₋₆ primary or secondary hydrocarbyl; and w is 0 or 1.

For example, in formula (2), L can be of formula (4) 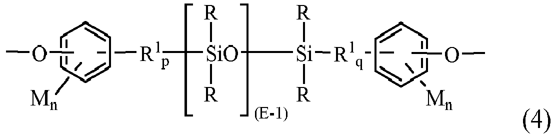 wherein E is 6-100, or 11-80, or 11-60; and each occurrence of R is independently an unsubstituted or substituted C₁₋₁₃ alkyl, C₁₋₁₃ alkoxy, C₃₋₆ cycloalkyl, C₃₋₆ cycloalkoxy, C₆₋₁₄ aryl, C₆₋₁₀ aryloxy, C₇₋₁₃ arylalkylene, or C₇₋₁₃ alkylarylene. The foregoing groups can be fully or partially halogenated with fluorine, chlorine, bromine, or iodine, or a combination thereof. Further in the formula (4), each p and q are independently 0 or 1; R¹ is a divalent C₂₋₈ aliphatic group, and each occurrence of M is independently halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n is independently 0, 1, 2, 3, or 4. Preferably in formula 4, E is 5-60; each occurrence of R is independently C₁₋₆ alkyl, C₃₋₆ cycloalkyl, or C₆₋₁₄ aryl, more preferably methyl; p and q are each 1; R¹ is a divalent C₂₋₈ aliphatic group, M is halogen, cyano, C₁₋₄ alkyl, C₁₋₄ alkoxy, C₆₋₁₀ aryl, C₇₋₁₂ aralkyl, or C₇₋₁₂ alkylaryl, more preferably methyl or methoxy; and each n is independently 0, 1, or 2.

For example, L can be of formula (4a) 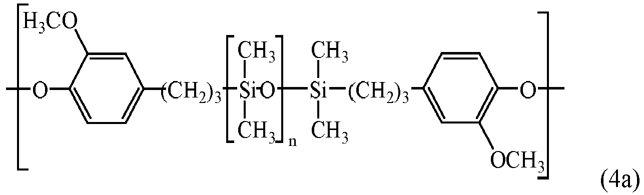 wherein n has an average value of 5-100, or 10-80, or 10-60.

The PPE oligomer can be a bifunctional oligomer of formula (2a) 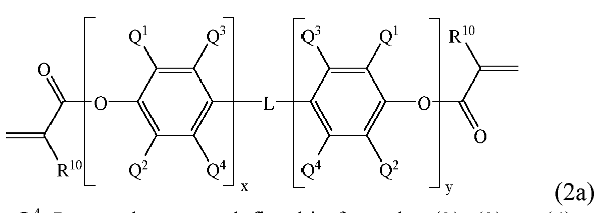 wherein Q¹, Q², Q³, Q⁴, L, x and y are as defined in formulas (2), (3), or (4) and R¹⁰ is methyl or hydrogen. For example, Q¹, Q², Q³, or Q⁴ can be hydrogen, methyl, cyclohexyl, phenyl, di-n-butylaminomethyl, or morpholinomethyl, or a combination thereof. Exemplary PPE oligomers of this type are commercially available, for example as NORYL SA9000 from SABIC.

For example, the PPE oligomer can be a bifunctional oligomer of formula (2c) 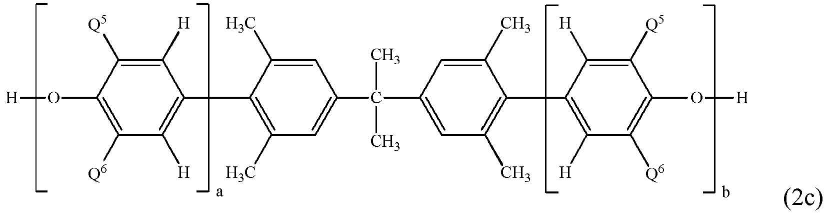 wherein each occurrence of Q⁵ and Q⁶ is independently methyl, di-n-butylaminomethyl, or morpholinomethyl; and each occurrence of a and b is independently 0 to 20, with the proviso that the sum of a and b is at least 2. An exemplary PPE oligomer is NORYL SA90 from SABIC.

The bifunctional PPE oligomers of formula (2) can be prepared by derivatization of hydroxyl-terminated PPE oligomers prepared by oxidative polymerization of at least one monohydric phenol, optionally in combination with at least one dihydric or polyhydric phenol, in the presence of a polymerization catalyst comprising a catalyst metal ion and a catalyst amine ligand, oxygen, and solvent. The polymerization catalyst can be prepared *in situ* by mixing the catalyst metal ion and the catalyst amine ligand. The solvent can be benzene, toluene, xylenes, mesitylene, chlorobenzene, dichlorobenzenes, chloroform, or combinations thereof. In some aspects, the solvent comprises toluene. The molecular oxygen can be provided, for example, in a purified form or as air. Derivatization of one or both of the terminal hydroxyl groups to provide groups Z can be by methods known in the art.

For example, the PPE oligomer can be a homopolymer, copolymer, or combination thereof. The PPE oligomer can include a poly(2,6-dimethyl-1,4-phenylene ether). For example, the PPE oligomer can consist of poly(2,6-dimethyl-1,4-phenylene ether).

The poly(2,6-dimethyl-1,4-phenylene ether) can further be a block copolymer comprising a poly(phenylene ether) block including units as described above in formula (1), end groups Z as described in formula (2), and an aryloxy-terminated polysiloxane block having repeating siloxane units of formula (5) 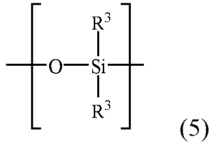 wherein each occurrence of R³ is independently C₁₋₁₂ hydrocarbyl or C₁₋₁₂ halohydrocarbyl; and the polysiloxane block further comprises a terminal unit of formula (6) 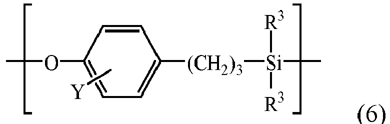 wherein Y is hydrogen, halogen, C₁₋₁₂ hydrocarbyl, or C₁₋₁₂ hydrocarbyloxy, and each occurrence of R³ is independently hydrogen, C₁₋₁₂ hydrocarbyl, or C₁₋₁₂ halohydrocarbyl. For example, Y is hydrogen, halogen, C₁₋₆ hydrocarbyl, or C₁₋₆ hydrocarbyloxy, and each occurrence of R³ is independently hydrogen, C₁₋₆ hydrocarbyl, or C₁₋₆ halohydrocarbyl. For example, Y is hydrogen, methyl, or methoxy, and each R³ is methyl. For example, the polysiloxane block can be of formula (7) 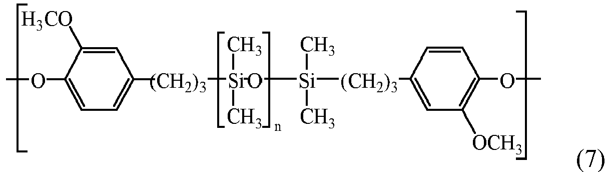 wherein n has an average value of 5-80 or 10-60. In an aspect the block copolymer comprises poly(2,6-dimethyl-1,4-phenylene ether) blocks, poly(2,6-dimethyl-1,4-phenylene ether-co-2,3,6-trimethyl-1,4-phenylene ether) blocks, or a combination thereof; polysiloxane blocks of formula comprising, on average, 10-100 siloxane repeating units of formula (7); and terminal Z groups as described in formula (2), preferably (meth)acrylate groups. Manufacture of hydroxyl-terminated block copolymers are described, for example, in US 8722837. Derivatization of one or both of the terminal hydroxyl groups to provide groups Z can be by methods known in the art.

The PPE oligomer can be substantially free of incorporated diphenoquinone residues. As used herein, "substantially free" means that the less than 1 wt% of PPE oligomer molecules include the residue of a diphenoquinone. As described in US 3306874 to Hay, synthesis of a PPE oligomer by oxidative polymerization of monohydric phenol can yield both the desired PPE oligomer and a diphenoquinone as side product. For example, when the monohydric phenol is 2,6-dimethylphenol, 3,3',5,5'-tetramethyldiphenoquinone is generated. The diphenoquinone can be "reequilibrated" into the PPE oligomer (i.e., the diphenoquinone is incorporated into the PPE oligomer structure) by heating the polymerization reaction mixture to yield a PPE oligomer comprising terminal or internal diphenoquinone residues. For example, when a PPE oligomer is prepared by oxidative polymerization of 2,6-dimethylphenol to yield poly(2,6-dimethyl-1,4-phenylene ether) and 3,3',5,5'-tetramethyldiphenoquinone, reequilibration of the reaction mixture can produce a PPE oligomer with terminal and internal residues of incorporated diphenoquinone. This reequilibration reduces the molecular weight of the PPE oligomer. Accordingly, when a higher molecular weight PPE oligomer is selected, the diphenoquinone can be separated from the PPE oligomer rather than reequilibrating the diphenoquinone into the PPE oligomer chains. Such a separation can be achieved, for example, by precipitation of the PPE oligomer in a solvent or solvent mixture that the PPE oligomer is insoluble and the diphenoquinone is soluble. For example, when a PPE oligomer is prepared by oxidative polymerization of 2,6-dimethylphenol in toluene to yield a toluene solution comprising poly(2,6-dimethyl-1,4-phenylene ether) and 3,3',5,5'-tetramethyldiphenoquinone, a poly(2,6-dimethyl-1,4-phenylene ether) essentially free of diphenoquinone can be obtained by mixing 1 volume of the toluene solution with 1-4 volumes of methanol or a methanol/water mixture. Alternatively, the amount of diphenoquinone side-product generated during oxidative polymerization can be minimized (e.g., by initiating oxidative polymerization in the presence of less than 10 wt.% of the monohydric phenol and adding at least 95 wt.% of the monohydric phenol over the course of at least 50 minutes), and/or the reequilibration of the diphenoquinone into the PPE oligomer chain can be minimized (e.g., by isolating the PPE oligomer no more than 200 minutes after termination of oxidative polymerization). These approaches are described in International Patent Application Publication No. WO2009/104107 A1 of Delsman et al. In an alternative approach using the temperature-dependent solubility of diphenoquinone in toluene, a toluene solution containing diphenoquinone and PPE oligomer can be adjusted to a temperature of 25°C, at which diphenoquinone is poorly soluble but the PPE oligomer is soluble, and the insoluble diphenoquinone can be removed by solid-liquid separation (e.g., filtration).

The PPE oligomers can be lower molecular weight PPE oligomers. The PPE oligomer can have a number average molecular weight of 500-7,000 grams per mole (g/mol), and a weight average molecular weight of 500-15,000 g/mol, as determined by gel permeation chromatography using polystyrene standards. In some aspects, the number average molecular weight can be 750-4,000 g/mol, and the weight average molecular weight can be 1,500-9,000 g/mol, as determined by gel permeation chromatography using polystyrene standards.

The PPE oligomer can have an intrinsic viscosity of 0.03 to 0.9 deciliter per gram (dl/g). For example, the PPE oligomer can have an intrinsic viscosity of 0.03 to 0.15 dl/g, or 0.03 to 0.09 dl/g, as measured at 25°C in chloroform using an Ubbelohde viscometer.

The PPE oligomer is soluble in the anhydride curing agent. The term "soluble in the anhydride curing agent" means that there is a temperature range where a combination of the anhydride curing agent and the PPE oligomer can be combined to form a homogeneous phase. As used herein, "forming a homogeneous phase" means creating a state where there is no visible separation between the components. The homogeneous phase can be formed in a certain temperature range without regard to any separation that may occur outside of that temperature range, for example, at room temperature. For example, a combination of the anhydride curing agent and the PPE oligomer can be stirred, heated, or heated under stirring to form a homogeneous phase.

For example, the PPE oligomer can be soluble in the anhydride curing agent at a temperature from 50 to 180°C. For example, the PPE oligomer can be soluble in the aromatic dianhydride from 80 to 180°C, more preferably from 90 to 180°C, even more preferably from 100 to 180°C.

The PPE oligomer can be soluble in the anhydride curing agent without the inclusion of any solvents or reactive diluents to improve the solubility of either component. In an aspect, the curable composition is substantially free of solvent or solvents. In a particular aspect, the curable composition is free of solvent. The term "substantially free of solvent" means that the curable composition contains less than 500 parts per million (ppm) by weight of solvent. A "solvent free" curable composition can have greater than 0 to 450 ppm by weight, preferably greater than 0 to 300 ppm by weight, more preferably greater than 0 to 200 ppm by weight, even more preferably greater than 0 to 100 ppm by weight of solvent, based on the total weight of the curable composition.

The curable composition further includes a heterocyclic accelerator or cure catalyst. The heterocyclic accelerator is included in an amount of 0.5 to 1.3 wt%, preferably 0.7 to 1.2 wt%, based on the total weight of the curable composition. For example, the curable composition can include 0.4 to 4 wt%, preferably 0.6 to 3 wt%, more preferably 0.7 to 2 wt% of the heterocyclic accelerator, based on the total weight of the curable composition.

The is a substituted or unsubstituted C₃₋₆ heterocycle including 1 to 4 ring heteroatoms, wherein each heteroatom is independently the same or different, and is nitrogen, oxygen, phosphorus, silicon, or sulfur, preferably nitrogen, oxygen, or sulfur, more preferably nitrogen. For example, the heterocyclic accelerator can be a C₃₋₄ five-membered ring wherein the ring heteroatoms are one or two nitrogen atoms. For example, the heterocyclic accelerator can be a C₃ five-membered ring wherein the ring heteroatoms are two nitrogen atoms.

Exemplary heterocyclic accelerators include, but are not limited to, benzotriazoles; triazines; piperazines such as aminoethylpiperazine, N-(3-aminopropyl)piperazine, or the like; imidazoles such as 1-methylimidazole, 2-methylimidazole, 3-methyl imidazole, 4-methylimidazole, 5-methylimidazole, 1-ethylimidazole, 2-ethylimidazole, 3-ethylimidazole, 4-ethylimidazole, 5-ethylimidazole, 1-n-propylimidazole, 2-n-propylimidazole, 1-isopropylimidazole, 2-isopropylimidazole, 1-n-butylimidazole, 2-n-butylimidazole, 1-isobutylimidazole, 2-isobutylimidazole, 2-undecyl-1H-imidazole, 2-heptadecyl-1H-imidazole, 1,2-dimethylimidazole, 1,3-dimethylimidazole, 2,4-dimethylimidazole, 2-ethyl-4-methylimidazole, 1-phenylimidazole, 2-phenyl-1H-imidazole, 4-methyl-2-phenyl-1H-imidazole, 2-phenyl-4-methylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 2-phenyl-4,5-dihydroxymethylimidazole, 2-phenyl-4-methyl-5-hydroxymethylimidazole, 1-cyanoethyl-2-phenyl-4,5-di(2-cyanoethoxy)methylimidazole; cyclic amidine such as 4-diazabicyclo(2,2,2)octane (DABCO), diazabicycloundecene (DBU), 2-phenyl imidazoline, or the like; N,N-dimethylaminopyridine (DMAP); sulfamidate; or a combination thereof.

The curable composition can include an optional additive composition. The additive composition can include a particulate filler, a fibrous filler, a reinforcing material, an antioxidant, a heat stabilizer, a light stabilizer, a ultraviolet light stabilizer, a ultraviolet light-absorbing compound, a near infrared light-absorbing compound, an infrared light-absorbing compound, a plasticizer, a lubricant, a release agent, a antistatic agent, an anti-fog agent, an antimicrobial agent, a colorant, a surface effect additive, a radiation stabilizer, a flame retardant, flame retardant synergists such as antimony pentoxide, an anti-drip agent, a fragrance, an adhesion promoter, a flow enhancer, a coating additive, a polymer different from the thermoset polymer, or a combination thereof. In a preferred aspect, the additive composition comprises a flame retardant, a particulate filler, a fibrous filler, an adhesion promoter, a flow enhancer, a coating additive, a colorant, or a combination thereof.

For example, the additive composition can include a particulate filler. The particulate filler can be alumina powder, hydrated alumina powder, quartz powder or fused quartz powder, glass fibers, carbon fibers, or a combination thereof. The curable composition can further include a fibrous substrate (woven or non-woven) such as glass, quartz, polyester, polyimide, polypropylene, cellulose, carbon fibers and carbon fibrils, nylon or acrylic fibers, preferably a glass substrate, that can be impregnated with the curable composition (i.e., prepregs).

The curable composition can be manufactured by combining the epoxy resin composition, the anhydride curing agent, poly(phenylene ether) oligomer, and the heterocyclic accelerator to provide the curable composition. The anhydride curing agent and the PPE oligomer can be combined to provide a first reaction mixture, preferably wherein the first reaction mixture does not contain a solvent or reactive diluent. The anhydride curing agent and the PPE oligomer can be combined at 50 to 160°C, preferably 60 to 120°C, more preferably 70 to 100°C to provide the first reaction mixture. The first reaction mixture can include one or more reaction products formed by a reaction between the anhydride curing agent and the PPE oligomer. Thus, the first reaction mixture can include one or more reaction products formed by a reaction between the anhydride curing agent and the PPE oligomer, and can also include an unreacted portion of the anhydride curing agent and an unreacted portion of the PPE oligomer. For example, the curable composition can include a product or products of the first reaction mixture including a product of the reaction of the PPE oligomer and the anhydride curing agent, the epoxy resin composition, and the heterocyclic accelerator. For example, the curable composition can include a first reaction mixture, the epoxy resin composition, and the heterocyclic accelerator, wherein the first reaction mixture includes one or more reaction products formed by a reaction between the anhydride curing agent and the PPE oligomer, optionally an unreacted portion of the anhydride curing agent, and optionally an unreacted portion of the PPE oligomer, and wherein the first reaction mixture is obtained by heating a combination of the anhydride curing agent and the PPE oligomer.

The epoxy resin composition can be combined with the first reaction mixture to provide the curable composition. For example, the epoxy resin composition can be added to the first reaction mixture to provide a second reaction mixture. The heterocyclic accelerator can then be added to the second reaction mixture. Alternatively, both the epoxy resin composition and the heterocyclic accelerator can be added together to the first reaction mixture. The epoxy resin composition and the first reaction mixture can be combined at a temperature of 50 to 160°C, preferably 60 to 120°C, more preferably 70 to 100°C to provide the curable composition. For example, the first reaction mixture and the second reaction mixture do not include a solvent or reactive diluent

In another aspect, disclosed is a thermoset epoxy composition that includes a cured product of the curable composition. The cured product of the curable composition can be obtained by curing at a maximum curing temperature of 165°C or less, preferably 160°C or less, more preferably 155°C or less. For example, the cured product of the curable composition can be obtained by curing at a curing temperature from 75 to 155°C, more preferably from 80 to 15°C. The heating period can be from 1 minute to 10 hours, preferably 1 minute to 6 hours, more preferably 1 to 3 hours. The curing process can be staged to produce a partially cured and often tack-free resin, which then is fully cured by heating for longer periods or temperatures within the aforementioned ranges.

The curable composition can be cured, for example, by compression molding, injection molding, transfer molding, pultrusion, resin casting, or a combination thereof. For example, the curable composition can be disposed in, for example injected into, a mold and then cured at 75 to 155°C in the mold. The curing time can be from 1 to 15 hours in the mold. Various molded articles or components can be prepared in this manner, including those described herein.

The cured product of the curable composition can have a glass transition temperature (T_{g}) of 130 to 150°C, preferably 130 to 145°C, more preferably 130 to 140°C, as determined by dynamic mechanical analysis (DMA).

The cured product of the curable composition can be clear and/or transparent. The cured product of the curable composition can have a light transmission of greater than 50%, preferably greater than 70%, more preferably greater than 90%. The light transmission can be determined on a 2 millimeter (mm) plaque according to ASTM D1003. As used herein, "light transmission" means transmission of visible light in a wavelength region of 380 to 750 nanometers (nm).

The cured product of the curable composition can have a critical strain energy release rate of 160 to 300 joules per square meter (J/m²), preferably 180 to 300 J/m², more preferably 200 J/m² as determined by ASTM D5045

The curable compositions and thermoset epoxy compositions can be used in a variety of applications and articles, including any applications where conventional epoxides are currently used. Exemplary uses and applications include coatings such as protective coatings, sealants, weather resistant coatings, scratch resistant coatings, and electrical insulative coatings; adhesives; binders; glues; composite materials such as those using carbon fiber and fiberglass reinforcements. When utilized as a coating, the disclosed compounds and compositions can be deposited on a surface of a variety of underlying substrates. For example, the compositions can be deposited on a surface of metals, plastics, glass, fiber sizings, ceramics, stone, wood, or any combination thereof. The disclosed compositions can be used as a coating on a surface of a metal container, such as those commonly used for packaging and containment in the paint and surface covering industries. The coated metal can be aluminum or steel.

Articles that can be prepared using the disclosed curable compositions and thermoset epoxy compositions include, for example, electrical components, and computer components. Other articles include, for example, components of transport, including bicycle, motorcycle, automotive, aircraft, and watercraft exterior and interior components. For example, the article can be in the form of in the form of a composite, a foam, a fiber, a layer, a coating, an encapsulant, an adhesive, a sealant, a component, a prepreg, a casing, or a combination thereof. In certain disclosed, the disclosed curable compositions are used for the production of composite materials for use in the aerospace industry. The curable compositions can be used in forming composites used for printed circuit boards. Methods of forming composites for use in printed circuit boards are known in the art and are described in, for example, U.S. Pat. No. 5,622,588 to Weber, U.S. Pat. No. 5,582,872 to Prinz, and U.S. Pat. No. 7,655,278 to Braidwood.

Also provided is an electronic device comprising the cured product of the curable composition. The electronic device can include a substrate comprising any materials commonly used in the electronics industry, including, but not limited to, polymer, glass, metal, ceramic, or the like, and can be flexible or rigid. The substrate can be a printed circuit board, an epoxy circuit card, or a copper lead frame. The substrate can be a carrier for a metallization pattern which can include an interconnection pad and a mounting area on which an electronic component can be mounted, for instance, by an adhesive. The electronic component can be soldered to the mounting area. Representative electronic components that can be encapsulated with the cured product include transistors, capacitors, relays, diodes, resistors, networks of resistors, integrated circuits, or the like. The electronic component can be connected with the wires to various other electronic components, such as interconnection pads. The wires can be metal wires, such as copper, gold, aluminum, or the like. The electronic component and the wires are at least partially encapsulated with the cured product of the curable composition.

Additional applications include, for example, acid bath containers; neutralization tanks; aircraft components; bridge beams; bridge deckings; electrolytic cells; exhaust stacks; scrubbers; sporting equipment; stair cases; walkways; automobile exterior panels such as hoods and trunk lids; floor pans; air scoops; pipes and ducts, including heater ducts; industrial fans, fan housings, and blowers; industrial mixers; boat hulls and decks; marine terminal fenders; tiles and coatings; building panels; business machine housings; trays, including cable trays; concrete modifiers; dishwasher and refrigerator parts; electrical encapsulants; electrical panels; tanks, including electrorefining tanks, water softener tanks, fuel tanks, and various filament-wound tanks and tank linings; furniture; garage doors; gratings; protective body gear; luggage; outdoor motor vehicles; pressure tanks; printed circuit boards; optical waveguides; radomes; railings; railroad parts such as tank cars; hopper car covers; car doors; truck bed liners; satellite dishes; signs; solar energy panels; telephone switchgear housings; tractor parts; transformer covers; truck parts such as fenders, hoods, bodies, cabs, and beds; insulation for rotating machines including ground insulation, turn insulation, and phase separation insulation; commutators; core insulation and cords and lacing tape; drive shaft couplings; propeller blades; missile components; rocket motor cases; wing sections; sucker rods; fuselage sections; wing skins and fairings; engine narcelles; cargo doors; tennis racquets; golf club shafts; fishing rods; skis and ski poles; bicycle parts; transverse leaf springs; pumps, such as automotive smog pumps; electrical components, embedding, and tooling, such as electrical cable joints; wire windings and densely packed multi-element assemblies; sealing of electromechanical devices; battery cases; resistors; fuses and thermal cut-off devices; coatings for printed wiring boards; casting items such as capacitors, transformers, crankcase heaters; small molded electronic parts including coils, capacitors, resistors, and semiconductors; as a replacement for steel in chemical processing, pulp and paper, power generation, and wastewater treatment; scrubbing towers; pultruded parts for structural applications, including structural members, gratings, and safety rails; swimming pools, swimming pool slides, hot-tubs, and saunas; drive shafts for under the hood applications; dry toner resins for copying machines; marine tooling and composites; heat shields; submarine hulls; prototype generation; development of experimental models; laminated trim; drilling fixtures; bonding jigs; inspection fixtures; industrial metal forming dies; aircraft stretch block and hammer forms; vacuum molding tools; flooring, including flooring for production and assembly areas, clean rooms, machine shops, control rooms, laboratories, parking garages, freezers, coolers, and outdoor loading docks; electrically conductive compositions for antistatic applications; for decorative flooring; expansion joints for bridges; injectable mortars for patch and repair of cracks in structural concrete; grouting for tile; machinery rails; metal dowels; bolts and posts; repair of oil and fuel storage tanks, and numerous other applications.

Methods of forming a composite can include impregnating a reinforcing structure with a curable composition; partially curing the curable composition to form a prepreg; and laminating one or a plurality of prepregs. The lamination can include disposing an additional layer, e.g., an electrically conductive layer or an adhesive or bond ply on a side of a prepreg before lamination. The lamination can include disposing an additional layer, e.g., an electrically conductive layer or an adhesive or bond ply on a side of a prepreg before lamination.

Reinforcing structures suitable for prepreg formation are known in the art. Suitable reinforcing structures include reinforcing fabrics. Reinforcing fabrics include those having complex architectures, including two or three-dimensional braided, knitted, woven, and filament wound. The curable composition is capable of permeating such complex reinforcing structures. The reinforcing structure can comprise fibers of materials known for the reinforcement of plastics material, for example fibers of carbon, glass, metal, and aromatic polyamides. Suitable reinforcing structures are described, for example, in Anonymous (Hexcel Corporation), "Prepreg Technology", March 2005, Publication No. FGU 017b; Anonymous (Hexcel Corporation), "Advanced Fibre Reinforced Matrix Products for Direct Processes", June 2005, Publication No. ITA 272; and Bob Griffiths, "Farnborough Airshow Report 2006", CompositesWorld.com, September 2006. The weight and thickness of the reinforcing structure are chosen according to the intended use of the composite using criteria well known to those skilled in the production of fiber reinforced resin composites. The reinforced structure can contain various finishes suitable for the epoxy matrix.

The method of forming the composite can comprise partially curing the curable composition after the reinforcing structure has been impregnated with it. Partial curing is curing sufficient to reduce or eliminate the wetness and tackiness of the curable composition but not so great as to fully cure the composition. The resin in a prepreg is customarily in the partially cured state, and those skilled in the thermoset arts, and particularly the reinforced composite arts, understand the concept of partial curing and how to determine conditions to partially cure a resin without undue experimentation. References herein to properties of the "cured epoxy composition" refer to a composition that is substantially fully cured. For example, the resin in a laminate formed from prepregs can be substantially fully cured. One skilled in the thermoset arts can determine whether a sample is partially cured or substantially fully cured without undue experimentation. For example, one can analyze a sample by differential scanning calorimetry (DSC) to look for an exotherm indicative of additional curing occurring during the analysis. A sample that is partially cured will exhibit an exotherm. A sample that is substantially fully cured will exhibit little or no exotherm. Partial curing can be achieved by subjecting the curable-composition-impregnated reinforcing structure to a temperature of 133 to 140°C for 4 to 10 minutes.

Commercial-scale methods of forming composites are known in the art, and the curable compositions described herein are readily adaptable to existing processes and equipment. For example, prepregs are often produced on treaters. The main components of a treater include feeder rollers, a resin impregnation tank, a treater oven, and receiver rollers. The reinforcing structure (E-glass, for example) is usually rolled into a large spool. The spool is then put on the feeder rollers that turn and slowly roll out the reinforcing structure. The reinforcing structure then moves through the resin impregnation tank, which contains the curable composition. The varnish impregnates the reinforcing structure. After emerging from the tank, the coated reinforcing structure moves upward through the vertical treater oven, which can be at a temperature of 175 to 200°C, and the solvent of the varnish is boiled away. The resin begins to polymerize at this time. When the composite comes out of the tower it is sufficiently cured so that the web is not wet or tacky. The cure process, however, is stopped short of completion so that additional curing can occur when laminate is made. The web then rolls the prepreg onto a receiver roll.

While the above-described curing methods rely on thermal curing, it is also possible to effect curing with radiation, including ultraviolet light and electron beams. Combinations of thermal curing and radiation curing can also be used.

Processes useful for preparing the articles and materials include those generally known to the art for the processing of thermosetting resins. Such processes have been described in the literature as in, for example, Engineered Materials Handbook, Volume 1, Composites, ASM International Metals Park, Ohio, copyright 1987 Cyril A. Dostal Senior Ed, pp. 105-168 and 497-533, and "Polyesters and Their Applications" by Bjorksten Research Laboratories, Johan Bjorksten (pres.) Henry Tovey (Ch. Lit. Ass.), Betty Harker (Ad. Ass.), James Henning (Ad. Ass.), Reinhold Publishing Corporation, New York, 1956. Processing techniques include resin transfer molding; sheet molding; bulk molding; pultrusion; injection molding, including reaction injection molding (RIM); atmospheric pressure molding (APM); casting, including centrifugal and static casting open mold casting; lamination including wet or dry lay-up and spray lay up; also included are contact molding, including cylindrical contact molding; compression molding; including vacuum assisted resin transfer molding and chemically assisted resin transfer molding; matched tool molding; autoclave curing; thermal curing in air; vacuum bagging; pultrusion; Seeman's Composite Resin Infusion Manufacturing Processing (SCRIMP); open molding, continuous combination of resin and glass; and filament winding, including cylindrical filament winding. For example, an article can be prepared from the disclosed curable compositions via a resin transfer molding process.

This disclosure is further illustrated by the following examples, which are nonlimiting.

### EXAMPLES

Materials used in the examples are described in Table 1.

**Table 1**

| Component | Description | Source |
|---|---|---|
| BPA-DGE | DER 332: Diglycidyl ether of bisphenol A | Sigma-Aldrich |
| 1-MI | 1-methylimidazole | Sigma-Aldrich |
| MTHPA | Tetrahydro-4-methylphthalic anhydride | TCI Chemicals |
| PPE | Polyphenylene ether (obtained as SA90) | SABIC |

### Comparative Example

44 grams (g) of MTHPA was combined with 56.2 g of BPA-DGE, mixed well, and heated at 80°C for 5 minutes. To the resulting mixture was added 1 g of 1-MI. The resulting mixture was poured into a mold and cured in the mold at 80°C for 30 minutes, 120°C for 90 minutes, and 150°C for 90 minutes to provide a rigid and clear casting.

### Example 1

9.1 g of PPE powder was combined with 39.8 g of MTHPA, mixed well and heated at 80°C to afford a clear solution. To the reaction mixture was added with 51.1 g of BPA-DGE under mechanical stirring. Then, 1 g of 1-MI was added thereto, and the resulting pre-resin composition was poured into a mold. The composition was cured at 80°C for 30 minutes, 120°C for 90 minutes, and 150°C for 90 minutes to provide a rigid and clear casting.

### Example 2

16.7 g of PPE powder was combined with 36.5 g of MTHPA, mixed well and heated at 90°C to afford a clear solution. To the reaction mixture was added with 46.8 g of BPA-DGE under mechanical stirring. Then, 1 g of 1-MI was added thereto, and the resulting pre-resin composition was poured into a mold. The composition was cured at 80°C for 30 minutes, 120°C for 90 minutes, and 150°C for 90 minutes to provide a rigid and clear casting.

### Example 3

23.1 g of PPE powder was combined with 33.7 g of MTHPA, mixed well and heated at 100°C to afford a clear solution. To the reaction mixture was added with 43.2 g of BPA-DGE under mechanical stirring. Then, 1 g of 1-MI was added thereto, and the resulting pre-resin composition was poured into a mold. The composition was cured at 80°C for 30 minutes, 120°C for 90 minutes, and 150°C for 90 minutes to provide a rigid and clear casting.

Table 2 summarizes the compositions of Examples 1 to 3 and Comparative Example 1. All amounts are listed in grams.

**Table 2**

| | BPA-DGE | MTHPA | PPE | 1-MI |
|---|---|---|---|---|
| Comparative Example | 56.2 | 44 | 0 | 1 |
| Example 1 | 51.1 | 39.8 | 9.1 | 1 |
| Example 2 | 46.8 | 36.5 | 16.7 | 1 |
| Example 3 | 43.2 | 33.7 | 23.1 | 1 |

Table 3 shows the glass transition temperature (T_{g}) and critical strain energy release rate (G_{1C}) for the compositions.

**Table 3**

| | PPE (wt%) | T_{g} (°C) | G_{1C} (J/m²) |
|---|---|---|---|
| Comparative Example | - | 147 | 154 |
| Example 1 | 9.1 | 148 | 165 |
| Example 2 | 16.7 | 154 | 193 |
| Example 3 | 23.1 | 153 | 234 |

As shown in Table 3, the cured resin of the Comparative Example achieved a T_{g} of 147°C, whereas the 10 wt% (target wt%) of added PPE in Example 1 achieved a similar T_{g} of 148°C. The increase in glass transition temperature (T_{g}) was less than 5% (a maximum of 6°C) by the addition of 20 or 30 wt% (target wt%) of PPE oligomer to the compositions. Notably, Examples 2 and 3 achieved a T_{g} of 154°C and 153°C, respectively. This result shows that an increase in the amount of PPE from 16.7 to 23.1 wt% (actual wt%) resulted in a decrease in T_{g} for this resin system.

Table 3 also compares the critical strain energy release rate (G_{1C}) of the cured resins, where an increase in G_{1C} corresponds to an increase in fracture toughness of the resins. Each of Examples 1 to 3, which achieved G_{1C} of 165 J/m², 193 J/m², and 234 J/m², respectively, demonstrated an increase in fracture toughness relative to the Comparative Example (G_{1C} of 154 J/m²). The incorporation of increasing amounts of PPE in Examples 1 to 3 achieved corresponding increases to the G_{1C}. Example 3 achieved a G_{1C} of 234 J/m², which is a 51% increase relative to the G_{1C} of the Comparative Example. These results show that PPE is effective to improve fracture toughness and glass transition temperature of cured epoxy resins.

This disclosure further encompasses the following Aspects.
Aspect 1. A curable composition comprising: 30 to 70 wt%, preferably 35 to 60 wt%, more preferably 40 to 55 wt% of an epoxy resin composition comprising one or more epoxy resins, each independently having an epoxy equivalent weight of at least 2; 15 to 50 wt%, preferably 20 to 50 wt%, more preferably 20 to 45 wt% of an anhydride curing agent; 2 to 50 wt%, preferably 2 to 40 wt%, more preferably 5 to 35 wt% of a PPE oligomer; and 0.5 to 1.3 wt%, preferably 0.6 to 1.3 wt%, more preferably 0.7 to 1.2 wt% of a heterocyclic accelerator, wherein the heterocyclic accelerator comprises a substituted or unsubstituted C₃₋₆ heterocycle comprising 1 to 4 ring heteroatoms, wherein each heteroatom is independently the same or different, and is nitrogen, oxygen, phosphorus, silicon, or sulfur, preferably nitrogen, oxygen, or sulfur, more preferably nitrogen, wherein a cured product of the curable composition has a glass transition temperature of 130 to 180 °C, preferably 130 to 170°C, more preferably 130 to 160°C, as determined by dynamic mechanical analysis, wherein the cured product of the curable composition has a critical strain energy release rate of 160 to 300 J/m², as determined by ASTM D5045, wherein the glass transition temperature and the critical strain energy of the cured product are measured after curing the curable composition under the same curing conditions, and wherein each wt% is based on a total weight of the curable composition.
Aspect 2. The curable composition of Aspect 1, wherein the curable composition does not contain a solvent or a reactive diluent; preferably wherein the curable composition does not contain a solvent or reactive diluent, and the anhydride curing agent is a liquid at 100°C, preferably 60°C, more preferably 40°C, even more preferably 30°C.
Aspect 3. The curable composition of Aspect 1 or 2, wherein the cured product of the curable composition is obtained at a maximum curing temperature of 185°C or less, preferably 160°C or less, more preferably 155°C or less, even more preferably wherein the cured product of the curable composition is obtained at a curing temperature from 75 to 155°C.
Aspect 4. The curable composition of any one of the preceding Aspects, wherein the anhydride curing agent is phthalic anhydride, hexahydrophthalic anhydride, tetrahydrophthalic anhydride, methyltetrahydrophthalic anhydride, methylhexahydrophthalic anhydride, maleic anhydride, succinic anhydride, dodecylsuccinic anhydride, dichlorosuccinic anhydride, or a combination thereof, preferably wherein the anhydride curing agent is methyltetrahydrophthalic anhydride, methylhexahydrophthalic anhydride, dodecylsuccinic anhydride, methyl nadic anhydride, or a combination thereof, more preferably wherein the anhydride curing agent is methyltetrahydrophthalic anhydride.
Aspect 5. The curable composition of any one of the preceding Aspects, wherein the epoxy resin composition is a bisphenol A epoxy resin, a triglycidyl-substituted epoxy resin, a tetraglycidyl-substituted epoxy resin, a bisphenol F epoxy resin, a phenol novolak epoxy resin, a cresol novolak epoxy resin, a cycloaliphatic diglycidyl ester epoxy resin, a cycloaliphatic epoxy resin comprising a ring epoxy group, an epoxy resin containing a spiro-ring, a hydantoin epoxy resin, or a combination thereof; preferably wherein the epoxy resin composition is bisphenol A diglycidyl ether, bisphenol F diglycidyl ether, or a combination thereof.
Aspect 6. The curable composition of any one of the preceding Aspects, wherein the PPE oligomer comprises repeating structural units of formula (1) as provided herein.
Aspect 7. The curable composition of any one of the preceding Aspects, wherein the heterocyclic accelerator comprises a C₃₋₄ five-membered ring wherein the ring heteroatoms are one or two nitrogen atoms, preferably wherein the heterocyclic accelerator comprises a C₃ five-membered ring wherein the ring heteroatoms are two nitrogen atoms.
Aspect 8. The curable composition of any one of the preceding Aspects, wherein the PPE oligomer has an intrinsic viscosity of 0.03 to 0.9, preferably 0.03-0.15, more preferably 0.03 to 0.09 deciliters per gram, as measured at 25°C in chloroform.
Aspect 9. The curable composition of any one of the preceding Aspects, comprising 40 to 55 wt% of methyltetrahydrophthalic anhydride, 30 to 42 wt% of bisphenol A diglycidyl ether, 6 to 33 wt% of the PPE oligomer, wherein the PPE oligomer is of a formula (2c) as provided herein, and 0.8 to 1.2 wt% of 1-methylimidazole, and wherein the glass transition temperature of the cured product of the curable composition is 148 to 155°C, as determined by dynamic mechanical analysis, the critical strain energy release rate of the cured product of the curable composition is 160 to 240 J/m², as determined by ASTM D5045, and the curing conditions are at a maximum temperature of 155°C.
Aspect 10. A method for the manufacture of the curable composition according of any one of the preceding Aspects, the method comprising: combining the anhydride curing agent and the PPE oligomer to provide a first reaction mixture, preferably wherein the first reaction mixture contains no solvent or reactive diluent; combining the first reaction mixture and the epoxy resin composition to form a second reaction mixture; and adding the heterocyclic accelerator to the second reaction mixture, preferably wherein the combining to form the first reaction mixture and the combining to form the second reaction mixture are each independently at a temperature of 50 to 160°C, preferably 60 to 120°C, more preferably 70 to 100°C.
Aspect 11. A thermoset epoxy composition comprising the cured product of the curable composition of any one of the preceding Aspects.
Aspect 12. The thermoset epoxy composition of Aspect 11, having a glass transition temperature of 130 to 160°C, preferably 140 to 165°C, more preferably 145 to 160°C, as determined by dynamic mechanical analysis; and a critical strain energy release rate of 160 to 300 J/m², as determined by ASTM D5045, wherein the glass transition temperature and the critical strain energy of the thermoset epoxy composition are measured after curing the curable composition under the same curing conditions.
Aspect 13. The thermoset epoxy composition of Aspect 11 or 12, wherein the cured product is provided by a method comprising: curing the curable composition at a maximum curing temperature of 185°C or less, preferably 160°C or less, more preferably 155°C or less; preferably wherein the curing is by compression molding, injection molding, transfer molding, pultrusion, resin casting, or a combination comprising at least one of the foregoing.
Aspect 14. The thermoset epoxy composition of any one of Aspects 11 to 13, wherein the cured product is provided by the method that comprises disposing the curable composition in a mold and curing at 75 to 185°C in the mold, preferably 80 to 160°C in the mold, more preferably 80 to 155°C in the mold, preferably wherein the cured thermoset epoxy composition is cured at 80 to 155°C in the mold and has a glass transition temperature of 140 to 160°C, as determined by dynamic mechanical analysis.
Aspect 15. An article comprising the thermoset epoxy composition of Aspect 11 or 12, preferably wherein the article is in the form of in the form of a composite, a foam, a fiber, a layer, a coating, an encapsulant, an adhesive, a sealant, a component, a prepreg, a casing, or a combination thereof.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt.%, or 5 wt.%-20 wt.%", is inclusive of the endpoints and all intermediate values of the ranges of "5 wt.%-25 wt.%,"). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some aspects," "an aspect," and so forth, means that a particular element described in connection with the aspects is included in at least one aspect described herein, and may or may not be present in other aspects. In addition, it is to be understood that the described elements may be combined in any suitable manner in the various aspects. A "combination thereof' is open and includes any combination comprising at least one of the listed components or properties optionally together with a like or equivalent component or property not listed.

Unless defined otherwise, technical and scientific terms used herein have the same meaning as is commonly understood by one of skill in the art. All cited patents, patent applications, and other references are incorporated by reference in their entireties. If a term in the present application contradicts or conflicts with a term in an incorporated reference, the term from the present application takes precedence over the conflicting term from the incorporated reference. Test standards are those in effect on the earliest priority filing date of the application.

Compounds are described using standard nomenclature. For example, any position not substituted by any indicated group is understood to have its valency filled by a bond as indicated, or a hydrogen atom. As used herein, the term "hydrocarbyl," whether used by itself or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As an example, Z¹ in formula (1) can be a di-n-butylaminomethyl group formed by reaction of a terminal 3,5-dimethyl-1,4-phenyl group with the di-n-butylamine component of an oxidative polymerization catalyst. The term "hydrocarbylene" refers to a divalent group containing carbon and hydrogen.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Aryl" means an aromatic hydrocarbon group containing the specified number of carbon atoms, such as phenyl, tropone, indanyl, or naphthyl. "Arylene" means a divalent aryl group. "Alkylaryl" means an aryl group substituted with an alkyl group. "Arylalkyl" means an alkyl group substituted with an aryl group. "Amino" means a radical of the formula -NRR' wherein R and R' are independently hydrogen or a C₁-C₃₀ hydrocarbyl, for example a C₁-C₂₀ alkyl group or a C₆-C₃₀ aryl group. "Halogen" or "halogen atom" means a fluorine, chlorine, bromine, or iodine atom. The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. The suffix "oxy" indicates that the open valence of the group is on an oxygen atom and the suffix "thio" indicates that the open valence of the group is on a sulfur atom.

Unless substituents are otherwise specifically indicated, each of the foregoing groups can be unsubstituted or substituted, provided that the substitution does not significantly adversely affect synthesis, stability, or use of the compound. "Substituted" means that the compound, group, or atom is substituted with at least one (e.g., 1, 2, 3, or 4) substituents instead of hydrogen, where each substituent is independently nitro (-NO₂), cyano (-CN), hydroxy (-OH), halogen, thiol (-SH), thiocyano (-SCN), C₁₋₆ alkyl, C₂₋₆ alkenyl, C₂₋₆ alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkyl (e.g., benzyl), C₇₋₁₂ alkylaryl (e.g., toluyl), C₄₋₁₂ heterocycloalkyl, C₃₋₁₂ heteroaryl, C₁₋₆ alkyl sulfonyl (-S(=O)₂-alkyl), C₆₋₁₂ arylsulfonyl (-S(=O)₂-aryl), or tosyl (CH₃C₆H₄SO₂-), provided that the normal valence of the substituted atom is not exceeded. When a compound or group is substituted, the indicated number of carbon atoms is the number of carbon atoms in the compound or group, including those of any substituents.

While particular aspects have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A curable composition comprising:
30 to 70 weight percent, preferably 35 to 60 weight percent, more preferably 40 to 55 weight percent of an epoxy resin composition comprising one or more epoxy resins, each independently having an epoxy equivalent weight of at least 2;
15 to 50 weight percent, preferably 20 to 50 weight percent, more preferably 20 to 45 weight percent of an anhydride curing agent;
2 to 50 weight percent, preferably 2 to 40 weight percent, more preferably 5 to 35 weight percent of a poly(phenylene ether) oligomer; and
0.5 to 1.3 weight percent, preferably 0.6 to 1.3 weight percent, more preferably 0.7 to 1.2 weight percent of a heterocyclic accelerator, wherein the heterocyclic accelerator comprises a substituted or unsubstituted C₃₋₆ heterocycle comprising 1 to 4 ring heteroatoms, wherein each heteroatom is independently nitrogen, oxygen, phosphorus, silicon, or sulfur; preferably nitrogen, oxygen, or sulfur; more preferably nitrogen,
wherein a cured product of the curable composition has a glass transition temperature of 130 to 180 °C, preferably 130 to 170°C, more preferably 130 to 160°C, as determined by dynamic mechanical analysis,
wherein the cured product of the curable composition has a critical strain energy release rate of 160 to 300 J/m², as determined by ASTM D5045,
wherein the glass transition temperature and the critical strain energy release rate of the cured product are measured after curing the curable composition under the same curing conditions, and
wherein each weight percent is based on a total weight of the curable composition.

2. The curable composition of claim 1, wherein the curable composition does not contain a solvent or a reactive diluent;
preferably wherein the curable composition does not contain a solvent or reactive diluent, and the anhydride curing agent is a liquid at 100°C, preferably 60°C, more preferably 40°C, even more preferably 30°C.

3. The curable composition of claim 1 or 2, wherein the cured product of the curable composition is obtained at a maximum curing temperature of 185°C or less, preferably 160°C or less, more preferably 155°C or less, even more preferably wherein the cured product of the curable composition is obtained at a curing temperature from 75 to 155°C.

4. The curable composition of any one of the preceding claims, wherein the anhydride curing agent is phthalic anhydride, hexahydrophthalic anhydride, tetrahydrophthalic anhydride, methyltetrahydrophthalic anhydride, methylhexahydrophthalic anhydride, maleic anhydride, succinic anhydride, dodecylsuccinic anhydride, dichlorosuccinic anhydride, or a combination thereof,
preferably wherein the anhydride curing agent is methyltetrahydrophthalic anhydride, methylhexahydrophthalic anhydride, dodecylsuccinic anhydride, methyl nadic anhydride, or a combination thereof,
more preferably wherein the anhydride curing agent is methyltetrahydrophthalic anhydride.

5. The curable composition of any one of the preceding claims, wherein the epoxy resin composition is a bisphenol A epoxy resin, a triglycidyl-substituted epoxy resin, a tetraglycidyl-substituted epoxy resin, a bisphenol F epoxy resin, a phenol novolak epoxy resin, a cresol novolak epoxy resin, a cycloaliphatic diglycidyl ester epoxy resin, a cycloaliphatic epoxy resin comprising a ring epoxy group, an epoxy resin containing a spiro-ring, a hydantoin epoxy resin, or a combination thereof;
preferably wherein the epoxy resin composition is bisphenol A diglycidyl ether, bisphenol F diglycidyl ether, or a combination thereof.

6. The curable composition of any one of the preceding claims, wherein the poly(phenylene ether) oligomer comprises repeating structural units of formula (1) 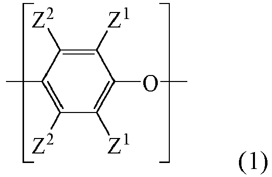 wherein
each occurrence of Z¹ is independently halogen, unsubstituted or substituted C₁₋₁₂ primary or secondary hydrocarbyl, C₁₋₁₂ hydrocarbylthio, C₁₋₁₂ hydrocarbyloxy, or C₂-C₁₂ halohydrocarbyloxy wherein at least two carbon atoms separate the halogen and oxygen atoms; and
each occurrence of Z² is independently hydrogen, halogen, unsubstituted or substituted C₁₋₁₂ primary or secondary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms.

7. The curable composition of any one of the preceding claims, wherein the heterocyclic accelerator comprises a C₃₋₄ five-membered ring wherein the ring heteroatoms are one or two nitrogen atoms,
preferably wherein the heterocyclic accelerator comprises a C₃ five-membered ring wherein the ring heteroatoms are two nitrogen atoms.

8. The curable composition of any one of the preceding claims, wherein the poly(phenylene ether) oligomer has an intrinsic viscosity of 0.03 to 0.9, preferably 0.03-0.15, more preferably 0.03 to 0.09 deciliters per gram, as measured at 25°C in chloroform.

9. The curable composition of any one of the preceding claims, comprising
40 to 55 wt% of methyltetrahydrophthalic anhydride,
30 to 42 wt% of bisphenol A diglycidyl ether,
6 to 33 wt% of the poly(phenylene ether) oligomer, wherein the poly(phenylene ether) oligomer is of formula (2c) 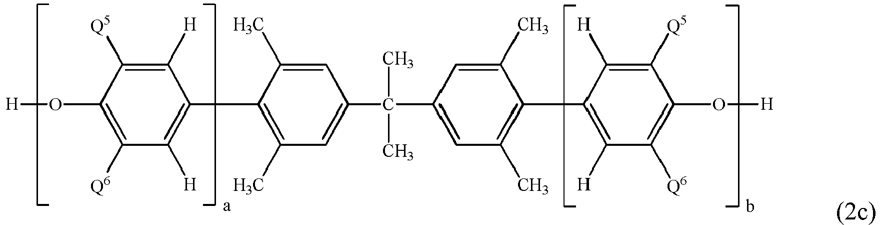 wherein
each occurrence of Q⁵ and Q⁶ independently comprises methyl, di-n-butylaminomethyl, or morpholinomethyl, preferably methyl, and
each occurrence of a and b is independently 0 to 20, with the proviso that the sum of a and b is at least 2, and
0.8 to 1.2 wt% of 1-methylimidazole, and
wherein
the glass transition temperature of the cured product of the curable composition is 148 to 155°C, as determined by dynamic mechanical analysis,
the critical strain energy release rate of the cured product of the curable composition is 160 to 240 J/m², as determined by ASTM D5045, and
the curing conditions are at a maximum temperature of 155°C.

10. A method for the manufacture of the curable composition according of any one of the preceding claims, the method comprising:
combining the anhydride curing agent and the poly(phenylene ether) oligomer to form a first reaction mixture, preferably wherein the first reaction mixture contains no solvent or reactive diluent;
combining the first reaction mixture and the epoxy resin composition to form a second reaction mixture; and
adding the heterocyclic accelerator to the second reaction mixture,
preferably wherein the combining to form the first reaction mixture and the combining to form the second reaction mixture are each independently at a temperature of 50 to 160°C, preferably 60 to 120°C, more preferably 70 to 100°C.

11. A thermoset epoxy composition comprising the cured product of the curable composition of any one of the preceding claims.

12. The thermoset epoxy composition of claim 11, having
a glass transition temperature of 130 to 160°C, preferably 140 to 165°C, more preferably 145 to 160°C, as determined by dynamic mechanical analysis; and
a critical strain energy release rate of 160 to 300 J/m², as determined by ASTM D5045, wherein the glass transition temperature and the critical strain energy release rate of the thermoset epoxy composition are measured after curing the curable composition under the same curing conditions.

13. The thermoset epoxy composition of claim 11 or 12, wherein the cured product is provided by a method comprising:
curing the curable composition at a maximum curing temperature of 185°C or less, preferably 160°C or less, more preferably 155°C or less;
preferably wherein the curing is by compression molding, injection molding, transfer molding, pultrusion, resin casting, or a combination comprising at least one of the foregoing.

14. The thermoset epoxy composition of any one of claims 11 to 13, wherein the cured product is provided by the method that comprises
disposing the curable composition in a mold and curing at 75 to 185°C in the mold, preferably 80 to 160°C in the mold, more preferably 80 to 155°C in the mold,
preferably wherein the thermoset epoxy composition is cured at 80 to 155°C in the mold and has a glass transition temperature of 140 to 160°C, as determined by dynamic mechanical analysis.

15. An article comprising the thermoset epoxy composition of claim 11 or 12, preferably wherein the article is in the form of in the form of a composite, a foam, a fiber, a layer, a coating, an encapsulant, an adhesive, a sealant, a component, a prepreg, a casing, or a combination thereof.
